(19) **Europäisches Patentamt**

**European Patent Office**

**Office européen des brevets**

(11) **EP 1 037 096 A2**

(12) **EUROPEAN PATENT APPLICATION**

(43) Date of publication:
20.09.2000 Bulletin 2000/38

(51) Int. Cl.[7]: **G02F 1/313**, G02F 1/35,
G02B 6/28

(21) Application number: 00104605.1

(22) Date of filing: 03.03.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 13.03.1999 EP 99105247

(71) Applicant:
**PIRELLI CAVI E SISTEMI S.p.A.**
**20126 Milano (IT)**

(72) Inventor: **Castoldi, Andrea**
**20052 Monza (Milano) (IT)**

(74) Representative:
**Giannesi, Pier Giovanni et al**
**Pirelli S.p.A.**
**Direzione Proprietà Industriale**
**Viale Sarca, 222**
**20126 Milano (IT)**

(54) **Directional coupler and mach-zehnder modulator using such coupler**

(57) A dual output electro-optical modulator (100) for modulating an optical signal by an electrical signal (285), comprising a Mach-Zehnder interferometer with an input path (102), two arms (103, 104) and a directional coupler (105), wherein the directional coupler comprises two waveguides on a planar substrate (101) defining two inputs, two outputs and a coupling region between the inputs and the outputs where the waveguides are in close proximity to each other so as to cause coupling between them. The coupling region of the directional coupler comprises a strong coupling region and in that the length of parallel sections of optical waveguides in the coupling region is less than 35% of the length of the strong coupling region.

Fig.1

**Description**

The present invention relates to a dual output optical modulator, a method of modulating an optical signal, and an optical emitter with external modulation and a directional coupler.

The present invention also relates to a CATV system comprising a dual output optical modulator.

The distribution of television signals in CATV (community antenna television) systems can be carried out by means of optical fibres. The optical signal can be modulated in a direct way, by acting on the optical source, normally a laser, or in an indirect way, by means of an optical modulator.

An optical modulator which can be used for the amplitude modulation of an optical signal, with a modulating signal at radio frequency (RF) having very high frequencies (such as the carriers of television channels, which conventionally range from 40 to 860 MHz), consists, for example, of a device based on an interferometer of the Mach-Zehnder type, constructed on lithium niobate ($LiNbO_3$).

CATV transmission requires high degree of linearity and low harmonic distortions. The electro-optical characteristic, in other words the output optical power as a function of the input radio-frequency voltage, of modulators of the type mentioned is typically non-linear. The modulator must therefore be operated in a linear zone of its response characteristic.

For this purpose, a radio-frequency modulating signal is applied to an RF electrode of an electro-optical modulator of the Mach-Zehnder interferometer type, and a continuous bias voltage, which determines the operating point of the modulator, is applied to the same electrode or to a second electrode.

The modulating signal, applied to the RF input, consists, for example, of the set of modulated carriers of the television channels to be distributed to the users, e.g., in a number of 40 to 80.

The characteristic (optical transmission versus applied voltage) of Mach-Zehnder type modulators is described by a raised cosine. The maximum linearity point is the inflection point of the characteristic, halfway between maximum and minimum transmission. The modulator is therefore biased in that point by an applied voltage $V_Q$, so that the electrical modulating RF signal is transformed into an optical modulated signal with minimum second harmonic distortion.

The value of the biasing point voltage $V_Q$ is not constant, but varies with time, for example as a result of the accumulation of static charges in the $LiNbO_3$, and also with temperature.

A shift from the bias point increases this type of distortion, which deteriorates the Composite Second Order (CSO) parameter of the transmission system, a measure of crosstalk between channels of different frequency. Applicant has determined that an error of 1 part on 600 on the setting of bias point ($0,3°$ phase deviation, $180°$ being the phase change between maximum and minimum transmission) causes the CSO to rise till -65 dBc, which is a typical specification value for CATV systems. The control of this setting is performed with electronic feedback techniques.

Even when the modulator is working at the aforesaid biasing point, which minimises the even-order distortions, the non-linearity of the input-output characteristic causes residual odd-order distortions, principally of the third order, which are manifested in intermodulation products or CTB (composite triple beats) and cross modulation (XMOD), which degrade the quality of the signals reaching the users. This is because the quality of the television channels with amplitude modulation of the carrier is strongly affected by the presence of the aforesaid intermodulation products.

To limit these distortions to some extent, it is desirable to select a depth of modulation which is not too great for the modulating signals, for example approximately 3.5% or 4% per channel, in order to operate as near as possible to the linear portion of the characteristic (the term "depth of modulation" denoting the maximum value, expressed as a percentage, of the modulation index $\beta$).

A method to reduce the residual distortions, and in particular the third-order distortions, consists in pre-distorting the modulating signals by means of non-linear elements, so that the pre-distortion is compensated by the subsequent distortion introduced by the modulator. Further details on this method are described, for example, in the article by M. Nazarathy et al., "Progress in Externally Modulated AM CATV Transmission Systems", published in the Journal of Lightwave Technology, vol. 11, No. 1,01/93, pp. 82-104.

In CATV systems it is particularly advantageous to have the television signals available in a plurality of optical cables for more efficient distribution to the users.

With a conventional single output Mach Zehnder modulator half of the optical power (in excess of the component normal operation loss) is lost, due to the bias setting at half transmission. To overcome this 3 dB loss, the Y junction at the end of the Mach-Zehnder can be replaced by a directional coupler, where the phase modulation of light achieved in the two arms by electro-optic effect or in another known way is converted into amplitude modulation by means of evanescent coupling or bimodal interference.

The output power (and the efficiency) of such dual output Mach-Zehnder modulator, when operating near half transmission, is increased, since the output power is twice that of those having a single output.

The two optical outputs will ideally be complementary, that is a minimum transmission in the first output will coincide with a maximum transmission of the second output, and the bias point will be common for the two. In the bias point the two outputs will also have the same power, thus avoiding the above mentioned 3 dB loss.

US Patent 5,253,309 describes an optical transmission system which makes use of a modulator of the Mach-Zehnder type with a double output. In particular, in one embodiment, the two complementary outputs of the modulator are applied to two optical transmission fibres, and at the receiving end of the optical signal transmission line these fibres are connected to a balanced receiver, which, in order to combine the two received signals, subtracts one from another by means of a differential amplifier.

Applicant has observed that the two outputs of a Mach Zehnder modulator may not be precisely complementary but there may be a phase difference (relative phase delay) between the two modulated signals. Moreover, If one of the modulator outputs is locked in the bias point by an appropriate bias voltage $V_Q$, the other output will not operate in a linear condition. It is to be noted that the two outputs cannot be independently set in the respective bias point, because their operating points are linked together.

A method for reducing distortions in a dual output Mach Zehnder modulator is described in EP patent application 98122483.5 to the name of the Applicant. In that application it was observed that, by maintaining the bias voltage $V_Q$ at the inflection point of one of the characteristics of the modulator (with respect to one output), in such a way as to reduce the second-order distortions, the amplitude of these distortions is not identical for both outputs. In particular, it is within the expected values for the output which has the value of $V_Q$ under control and is outside the limits for the other output. It was then suggested that both outputs of dual output modulator can be kept under control in order to suitably bias the modulator and reduce the amplitude of distortions to a minimum and to compensate the variations of the operating point. Based on the above, EP patent application 98122483.5 disclosed a method of modulating an optical signal in response to a signal with a frequency in a predetermined input band, comprising the following steps:

- supplying an optical signal to an input of an electro-optical modulator;
- supplying an external electrical signal with a frequency in said band to an input of said electro-optical modulator;
- modulating said input optical signal with said external electrical signal;
- dividing said modulated optical signal into a first and a second modulated optical signal, which are complementary to each other;
- supplying an electrical bias signal to an input of said electro-optical modulator,
  wherein said step of supplying an electrical bias signal comprises:

- generating an electrical signal at a predetermined frequency outside said predetermined band, this signal being superimposed on said external electrical signal;
- generating an electrical control signal in response to said modulated optical signal;

characterised in that said steps of generating an electrical control signal in response to said modulated optical signal comprises:
- separating a fraction of said first modulated optical signal and detecting a first electrical feedback signal at a frequency which is twice said predetermined frequency;
- separating a fraction of said second modulated optical signal and detecting a second electrical feedback signal at a frequency which is twice said predetermined frequency;
- subtracting said first electrical feedback signal from said second electrical feedback signal.

Applicant has observed that in actual devices the phase delay $\triangle\phi$ between the two outputs can be in the order of less than one degree or, in some cases, in the order of a few degrees. In this connection, Applicant has found that a phase delay greater than 0.6° between the two outputs is undesirable in dual output modulators, because it may give rise to unacceptable distortions (greater than -65 dBc) in transmission of analog signals, such as in CATV transmission. The above phase delay limit value is associated with a bias point set at or around half-way between the inflection points of the characteristics for the two outputs, as disclosed in above mentioned EP98122483.5. If the modulator is biased at or around the inflection point of the characteristic of either output, however, unacceptable distortions may arise if the relative phase delay $\triangle\phi$ is greater than 0.3°. The above limits in relative phase delay between the two outputs set a serious technological constraint, in that it is difficult by current manufacturing techniques to achieve desirably high yields in the production of modulator having characteristics within the above limits.

Applicant has faced the problem of designing a dual output modulator having stable operating characteristics with respect to random variations in the manufacturing process. In particular, Applicant has faced the problem of designing a dual output modulator having a predictable and low value of the relative phase delay $\triangle\phi$ between the two outputs, independent of manufacturing induced fluctuations.

The paper "Filter characteristics of codirectionally coupled waveguides with weighted coupling" by R.C. Alferness et al., IEEE Journal of Quantum Electronics, Vol. QE-14, no. 11, Nov. 1978, pp. 843-847, examines filter-sidelobe suppression of codirectionally coupled optical waveguides with spatially tapered coupling strength. A phase-matched interaction results in complete power transfer between the guides at a given wavelength $\lambda_0$ and filtering results if the phase match is destroyed at other wavelengths, for example, by differential waveguide dispersion. The paper shows that the crossover intensity is periodic with increased total coupling and that an odd integer multiple of $\pi/2$ for total coupling is necessary for complete crossover.

The paper "Optical directional couplers with weighted coupling" by R.C. Alfemess, Applied Physics Letters, , Vol. 35, no. 3, 1 Aug. 1979, pp. 260-262, reports fabrication of optical directional couplers using titanium-diffused waveguides for which the coupling strength is carefully weighted along the device. With a Hamming function weighting, -25 dB transfer response sidelobes were obtained, with a significant increase in the performance of directional coupler filters and switches.

US 5,563,970 discloses an optical directional coupler filter having at least two guides, an input guide and a coupled guide. The spacing between the guides and hence the interactive strength is tailored so as to provide ultralow sidelobe levels at a narrow spectral bandwidth.

US 5,165,001 relates to optical branching devices with various values of a branching ratio or a coupling ratio, such as 50%, 20% or several %, and faces the task of providing a branching device with a coupling ratio which is less dependent on wavelength in a wide range of wavelengths. The patent discloses a guided-wave optical branching device having optical waveguides disposed on a substrate. The waveguides are partially arranged to be close to each other to form a tapered directional coupler in which the waveguides are point symmetrical or line symmetrical. Alternatively, the waveguides are neither line symmetrical nor point symmetrical. The tapered directional coupler reduces the wavelength dependence of the coupling ratio of the output power derived from the branching device.

The paper "New behavior in nonideal couplers", By I. Sanz et al., Applied Optics, Vol. 31, no. 22, 1 Aug. 1992, pp. 4332-4333, relates to 2 x 2 nonideal couplers. The paper shows that coupling losses are dependent on the relative phase difference between both fields. The paper discloses that in many of the 2 x 2 applications the phase characteristics are not important; however, there are some concrete applications for which these are of paramount importance, such as, for example, in optical coherent communications when 2 x 2 couplers are used as beam splitters in phase diversity receivers. For real couplers (assuming losses) the conclusion was reached that their phase characteristics are far from being constant as in the ideal coupler case (without losses). The theoretical calculations of the paper do not allow to determine the coupler characteristic angle $\phi$ (the phase shift caused by the coupling), but give (equation 4 in the paper) a range of possible values for the quantity $\cos(\phi)$. The paper concludes that a 2 x 2 real coupler does not have a fixed value for losses (the difference between input and output power), but the value is dependent on the relationship between the input fields to the coupler and the nature of the dependence is determined.

As disclosed in the paper "Measurement techniques for characterisation of 2 x 2 couplers", Electronics Letters,Vol. 28, no. 14, 2 July 1992, pp. 1303 - 1305, by the same authors as the above paper, a Mach Zehnder interferometer implemented in fibre optic form is used to characterise nonideal couplers. Experimental results show that both a deviation of the characteristic angle from the ideal value and a modulation of the output total power (depending on the relative phase shift between both input fields to the coupler) appear.

G.L. Abbas et al., "Heterodyne Receiver for Local Noise Suppression", Journal of Lightwave Technology, vol. LT-3, no. 5, Oct. 1985, (see in particular pages 1114 - 1122) disclose use of a single mode fibre directional coupler to combine a received signal and a local oscillator beam in a dual detector coherent receiver. The two coupler outputs, that contain some fraction of each input, are mixed in two detectors. The signals are subtracted in a 0°-180° hybrid junction, to produce the heterodyne beat signals. Ideally, the heterodyne beat signals are 180° out of phase. However, since the coupler is lossy, the above condition is not verified.

Although usually directional couplers are designed to work in weak coupling conditions, Applicant has determined that a strong coupling between the waveguides in the centre of the coupling region allows to improve the coupler performance.

Applicant has found that the maximum possible relative phase delay in a 3 dB directional coupler for use in coherent mixing of optical signal can be reduced by a strong coupling region of reduced length, so that the desired 3 dB coupling is obtained in a shorter length, corresponding to a lower loss.

Applicant has designed a modified coupler wherein a reduced length of the strong coupling region and matching of the 3 dB coupling condition is achieved by tailoring the distance and, in particular, the minimum distance between waveguides in the coupling region. This is achieved while leaving angles and curvature radiuses (if bends are used) unchanged.

Applicant has found that using the above designed coupler at the output of a dual output Mach Zehnder modulator results in a modulator with stable and predictably low relative phase delay between its two outputs. Furthermore, higher yields are achieved in the manufacturing process of the modulator without changes in the process technology.

Applicant has further determined that the relative phase delay in a coupler used to mix an information bearing signal and a local oscillator is advantageously reduced by reducing the losses in a strong coupling region of the coupler, and that use of the invention coupler in a coherent optical receiver allows to mix signal and local oscillator with low IF signal degradation. The invention also has to do with a coherent receiver comprising the invention directional coupler.

In a first aspect, the present invention relates to an analog optical transmission system, comprising:

an optical source (200) for emitting an optical signal;

a dual output electro-optical modulator (100) for modulating the optical signal by an analog electrical signal (285); two optical fibre lines (220, 230) coupled to respective outputs of the modulator, for transmitting the modulated optical signal to at least two receiving units (265, 275); the electro-optical modulator comprising a Mach-Zehnder interferometer with an input path (102), two arms (103, 104) and a directional coupler (105), wherein the directional coupler comprises two waveguides on a planar substrate (101) defining two inputs, two outputs and a coupling region between the inputs and the outputs where the waveguides are in close proximity to each other so as to cause coupling between them, characterised in that the coupling region of the directional coupler comprises a strong coupling region and in that the length of parallel sections of optical waveguides in the coupling region is less than 35% of the length of the strong coupling region.

Preferably at least one optical amplifier (205, 210) is coupled along at least one of the fibre lines, and/or at least a distribution station (240, 250) with one input and a plurality of outputs is coupled to at least one of the fibre lines.

In a second aspect, the present invention relates to a dual output electro-optical modulator (100) for modulating an optical signal by an electrical signal (285), comprising a Mach-Zehnder interferometer with an input path (102), two arms (103, 104) and a directional coupler (105), wherein the directional coupler comprises two waveguides on a planar substrate (101) defining two inputs, two outputs and a coupling region between the inputs and the outputs where the waveguides are in close proximity to each other so as to cause coupling between them, characterised in that the coupling region of the directional coupler comprises a strong coupling region and in that the length of parallel sections of optical waveguides in the coupling region is less than 35% of the length of the strong coupling region.

Preferably, said input path and said two arms are optical waveguides on said planar substrate.

Preferably the modulator comprises a dielectric buffer layer at least partly covering said planar substrate, and at least one ground electrode (113, 114) for coupling to a reference voltage. Advantageously it comprises an RF electrode (108) for modulating the relative phase between said two arms, and an bias electrode (109) for setting the operating point of the modulator. Preferably the modulator comprises an electrode (111) for the phase modulation of said optical signal.

In a third aspect, the present invention relates to an optical apparatus comprising at least an optical source for generating two mutually coherent signals and a planar optics coupler (105) for coherently mixing said optical signals, wherein the coupler comprises two optical waveguides (103, 104) formed on a planar substrate defining two inputs, two outputs and a coupling region between the inputs and the outputs where the waveguides are in close proximity to each other so as to cause coupling between them, characterised in that the coupling region comprises a strong coupling region and in that the length of parallel sections of optical waveguides in the coupling region is less than 35% of the length of the strong coupling region.

Preferably, the relative phase of the two optical signals changes with time.

Preferably the coupler has a splitting ratio between 44% and 56%, more preferably it has a 50% splitting ratio.

Preferably the coupler has a relative phase delay lower than $0.6°$, more preferably lower than $0.3°$.

In a fourth aspect, the present invention relates to a coherent optical receiver for receiving a coherent information bearing signal comprising a local oscillator (310), an optical coupler (105) with two inputs and two outputs and two photodetectors coupled at respective coupler outputs, the coupler comprising two optical waveguides formed on a planar substrate defining two inputs, two outputs and a coupling region between the inputs and the outputs wherein the waveguides are in dose proximity to each other so as to cause coupling between them, characterised in that the coupling region comprises a strong coupling region and in that the length of parallel sections of optical waveguides in the coupling region is less than 35% of the length of the strong coupling region.

In a further aspect, the present invention relates to a method for reducing the relative phase delay in a planar waveguide coupler comprising the steps of:

selecting a predetermined value of horizontal mode field diameter, in a selected wavelength operating range, for two waveguides on a planar substrate; forming a coupling region between the two waveguides by arranging the waveguides in a close proximity relationship; selecting the relative distance of the waveguides in a strong coupling region, included in the coupling region, at a distance lower than 1.5 times the horizontal mode field diameter;

tapering the distance of the waveguides in the strong coupling region so that the waveguides are substantially not parallel;

selecting the length of the strong coupling region as the minimum length achieving a uniform splitting ratio between the outputs.

Preferably said uniform splitting ratio is between 44% and 56%.

Further details can be obtained from the following description, with reference to the attached figures which show:

in Figure 1, a schematic drawing of a dual output Mach-Zehnder electro-optical modulator;

in Figure 2, a diagram of the characteristic response of the modulator for the two outputs;

in Figures 3a, 3b, a schematic drawing of two embodiments of a directional coupler;

in Figure 4, a diagram of the splitting ratio of a directional coupler versus the length of the coupling region;

in Figure 5, a scheme of an experimental setup used to measure the relative phase delay for a dual output modulator;

in Figure 6, a schematic drawing of an optical transmission and distribution system according to the invention;

in Figure 7, a schematic drawing of a coherent receiver;

in Figure 8, a computer simulation diagram of relative phase delay and extinction ratio versus minimum waveguide distance for a coupler according to fig. 3b;

in Figure 9, a computer simulation diagram of relative phase delay versus extinction ratio for couplers according to figs. 3a and 3b.

## DETAILED DESCRIPTION

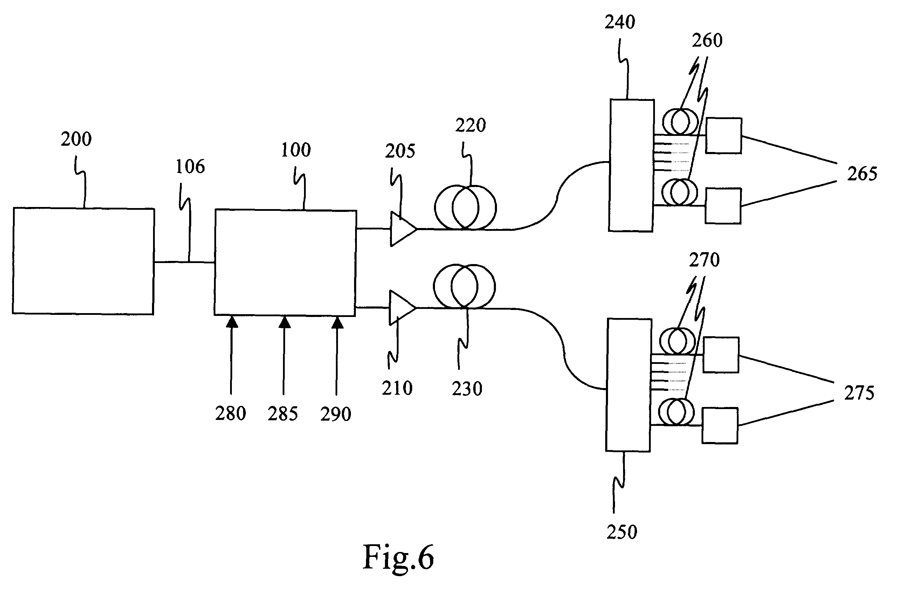

A CATV transmission system according to the invention is schematically shown in fig. 6. The output of a laser source 200, such as a semiconductor laser source, for example a DFB laser, is coupled via a single mode optical fibre 106 to the input of a dual output electro-optical modulator 100, that is described in the following.

Typical wavelength values for the laser source 200 are, for example, in the range 1540-1560 nm or in the range 1300 - 1320 nm.

Fibre 106 is preferably a polarisation maintaining fibre.

An information bearing RF signal 285, for example a CATV signals, is input to modulator 100, so as to superpose the information to the optical signal. A bias voltage 290 is also input to modulator 100 to bring its operating (bias) point in a linear response region.

An additional electrical input for an SBS suppression signal 280 may be provided on modulator 100.

It is known that an optical signal propagated along an optical fibre may give rise, if the optical power density is high, to the generation of radiation by stimulated Brillouin scattering (SBS). This radiation may constitute a source of noise capable of hindering the correct reception of the signal at the termination of the optical fibre.

It is also known, from US 4,560,246 and EP 565,035 for example, that the threshold optical power of the aforesaid phenomenon of stimulated Brillouin scattering in an optical fibre increases if the frequency band of the propagated optical signal is increased by phase modulation. Accordingly, modulator 100 may provide an electrode for the phase modulation of the signal to be transmitted.

The power and the frequency of the modulating electrical signal are selected, according to known relations, in such a way as to obtain the requisite widening of the band of the optical signal.

The two outputs of modulator 100 are coupled each to an optical fibre line 220, 230, provided to transmit the modulated signal to respective distribution stations 240, 250. Each of the latter can comprise an optical coupler to split and distribute the optical signal, via respective optical fibre lines 260, 270, to receiving units 265, 275, where the optical signal is converted to electrical signals and sent respective an RF distribution networks or, alternatively, directly to end users.

Fibre lines 220, 230, 260, 270 are preferably monomodal. Multimode fibres, however, can be advantageously adopted to cover relatively short line sections, e.g., in the range of few km. Multimode fibres, in particular, can be adopted for the signal distribution fibre network (260, 270).

Optical amplifiers 205, 210, for example erbium doped fibre amplifiers, can be provided at one or at each output of modulator 100 to boost the optical signal and increase the transmission distance along fibres 220, 230 and/or to increase the number of receiving units 265, 275 to be reached by the optical signal. The skilled in the art, to fulfil the specific needs of a signal distribution network may, according to known techniques, arrange additional optical amplifiers (not shown) along optical fibres 220, 230, 260, 270 and/or at the output of distribution stations 240, 250. The schematic distribution network 240, 250, 260, 270, 265, 275 shown in figure 6 can be adapted by the skilled in the art to the specific needs that arise in each practical case, e.g., by selecting an appropriate number and arrangement of distribution stations, optical fibres and receiving units.

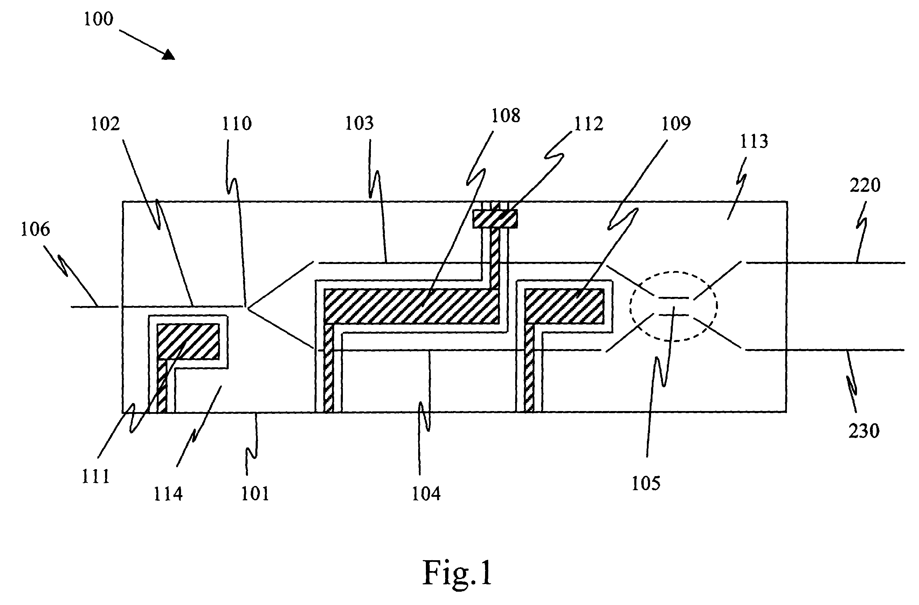

In fig. 1 an optical modulator particularly adapted for use in CATV systems is shown. The modulator 100 is made on a planar substrate 101. On the substrate surface an interferometric Mach-Zehnder waveguide configuration is formed in a manner convenient to the skilled in the art.

The planar substrate and the waveguides are made in any material convenient to the skilled in the art, for example, in one or a combination of the following material systems: semiconductors of the III-V or II-VI group, Si, glass, silica, polymer, ferroelectric and/or electrooptic materials. In a preferred embodiment the substrate is an x-cut lithium niobate crystal and the waveguides are made by titanium diffusion.

Such waveguide configuration comprises, as shown in fig. 1, an input waveguide 102 at a first end of the substrate 101, a bifurcation 110, such as a Y splitter, and two waveguide arms 103, 104. Arms 103, 104 come close together to form a directional coupler 105 and then separate again to terminate at an end of the substrate. The relative distance of waveguides 103, 104 at the substrate end is selected in relation to the technology chosen to couple the waveguide outputs to optical fibres. An exemplary value for the waveguide distance is 140 μm.

Waveguides 102, 103, 104, are single-mode waveguides at the device operating wavelength. In the following description the term "waveguide" will be used, for simplicity reasons, to refer to a single-mode waveguide.

A preferable operating wavelength for modulator 100 is in the range 1540-1560 nm. By following the teaching of the present invention the skilled in the art may, according to known techniques, select the device parameters, such as waveguide dimensions and layout, to adapt the herein disclosed modulator for operation in the 1300 - 1320 nm wavelength range.

A thin dielectric buffer layer of $SiO_2$, or another suitable dielectric material, can be used to cover the substrate 101 and waveguides formed therein. The thickness of the buffer layer is preferably comprised between 0 and 1 μm.

A RF electrode 108 and a bias electrode 109 are laid down on the buffer layer (if present), in the central region of the substrate 101, between the waveguide arms 103, 104. The length of the RF electrode is preferably comprised between 30 and 50 mm. The length of the bias electrode is preferably comprised between 5 and 15 mm.

In an alternative embodiment, RF electrode 108 is formed on a dielectric layer as above described, while bias electrode 109 is formed directly on the substrate surface, without any intermediate buffer layer. This embodiment, as disclosed in US 4,871,223, advantageously reduces the drift with time of the operating or bias point of the modulator.

According to a further alternative embodiment, not shown, a single electrode is present for RF and bias.

A phase modulation electrode 111 is advantageously arranged on the buffer layer (if present) on the side of the input waveguide 102, to modulate the phase of the input optical signal by an SBS suppression signal, as previously explained.

An alternative embodiment, not shown, has no phase modulating electrode 11 integrated together with the Mach-Zehnder amplitude modulator, resulting in a shorter device.

Ground electrodes 113 and 114 are also laid down on the substrate 101 and connected to a suitable voltage reference (ground reference).

RF electrode 108 is advantageously terminated to the ground at an end opposite to the signal input end by a suitable resistive termination 112.

Input optical fibre 106 and output optical fibres 220, 230 are fixed respectively to the first and to the second end of the substrate 101 in a conventional manner, for example by means of conventional fibre blocks and UV curable adhesives, after aligning with optical waveguides 102, 103, 104. It is to be noted that, although a right angle is shown in fig. 1 between the end and side surfaces of the substrate 101, an actual angle of approximately 6° with respect to a line normal to the side surfaces is generally used in practice. This small deviation from a right angle between end and side surfaces avoids backreflections in the optical fibres due to the transition zones between fibres 106, 107, 107' and substrate 101.

The modulator as described so far is implemented on a planar substrate. Other possible embodiments (not shown) for modulator 100, however, include forming on a planar substrate only coupler 105, or e.g., only interferometer arms 103, 104 and coupler 105. The remaining sections of the Mach Zehnder modulator, for example, can be made in free-space-propagation (bulk) optics or microoptics, according to known techniques. For example, a bulk beam splitter can be used instead of Y junction 110, and the optical beams from the two outputs of the beam splitter can be coupled to the planar substrate section of the device with known coupling techniques.

Operation of modulator 100 is as follows.

A coherent optical signal, generated by laser 200, travels along the input fibre 106, enters in the input optical waveguide 102 and is split in the two waveguide arms 103,104. The output directional coupler 105 provides interference between light in the two arms. If the arms 103, 104 are of exactly equal optical path length, the optical signals recombine in phase and a maximum of interference is reached. Equal optical powers will be sent in this case to the two outputs of coupler 105. If a phase difference is introduced between the two signals, interference in the coupler will distribute the light intensity unevenly between the coupler outputs. The phase difference between the two signals travelling in the arms 103, 104 is introduced by means of a RF signal applied to the RF electrode 108. The RF signal modifies the index of refraction in the central region of the substrate 101, in particular in the waveguide arms 103, 104, due to the electro-optical property of the lithium niobate. In this connection it is noted that phase velocity matching between the optical and a travelling wave RF signal can be improved by the presence of a dielectric buffer layer, e.g., in $SiO_2$. The thickness of the buffer layer is advantageously selected, according to known techniques, so as to maximise the above indicated phase velocity matching.

The modulation of the RF electrical signal is transformed in intensity modulation of the optical signal launched at the two outputs of directional coupler 105, toward the second end of the substrate 101 and then to the output optical fibres 220, 230', with a characteristic response curve described by a raised cosine, for each output. In particular, the two output signals are ideally complementary, that is a maximum in the response curve of the first output coincides with a minimum in the response curve of the second output.

The modulation characteristic of the Mach-Zehnder modulator, with respect to the operating point, can be expressed by the relation:

$$Pu = KZ \sin \beta$$

where:

Pu is the output optical power,
KZ is a coefficient which depends on the characteristic of the Mach-Zehnder modulator,
$\beta = \pi \cdot (Vm - V_Q)/V\pi$ is the modulation index of the modulating signals, expressed in radians,
Vm is the modulation voltage,
$V_Q$ is the bias voltage,
$V\pi$ is a constant.

This modulation characteristic is identified by two parameters:

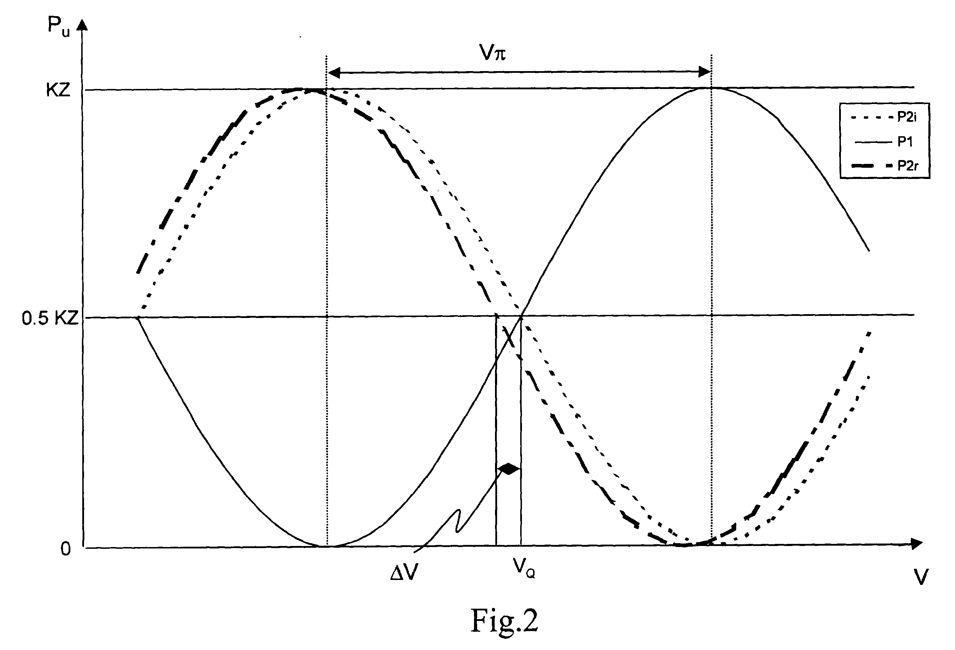

- the voltage $V\pi$ (shown in Figure 2), which represents the variation of voltage to be applied to the RF input to change the optical power from the maximum to the minimum value;
- the voltage $V_Q$ which represents the voltage to be applied to the bias electrode, to make the operating point correspond to the inflection point of the characteristic which has a sinusoidal form, that is it, has odd symmetry. In this case, the even-order distortions are cancelled and the odd-order distortions take on a clearly defined value.

For example, in the case of a Mach-Zehnder modulator of the type MOD DG-03-PS1SS, produced by the applicant, the aforesaid voltages may have the following values:

$$V\pi = 4.0V \text{ and } V_Q = 3.4V.$$

The modulator 100 is driven to operate in the maximum linearity point of its characteristic response by means of a signal $V_Q$ applied to the bias electrode 109. It is to be noted that for the double output configuration shown in fig. 1 the applied bias voltage is common for both the output signals. In this connection, if a relative phase delay

$$\triangle \phi = \pi \cdot \triangle V/V\pi$$

between the output signals is present, due to non-ideality of the directional coupler 105, one of the outputs will be locked in the maximum linearity point, while the other one will be out of the linearity point, thus introducing distortions in the system. This situation is sketched in fig. 2, which is a graph of output power Pu versus voltage V applied to the RF electrode. For Pu=0.5 KZ, that is for an equal power coming out of the two outputs of the modulator, the first output P1 is in the maximum linearity point; the actual second output $P2_r$, slightly shifted with respect to the ideal output $P2_i$, is out of the maximum linearity point by a relative phase delay $\triangle \phi$. In fig. 2 the relative voltage delay $\triangle V$ (corresponding to a phase delay $\triangle \phi$) is deliberately enhanced for clarity's sake. Applicant has observed that in actual devices $\triangle \phi$ can be in the order of less than one degree or, in some cases, in the order of a few degrees. In this connection, Applicant has noted that a relative phase delay greater than 0.6° may give rise to unacceptable distortions (greater than -65 dBc).

According to a possible, preferred, variant the modulator is driven to operate at or around half-way between the two curves of fig. 2 (P1 and $P2_r$), as taught in above mentioned EP98122483.5. In this case, although both outputs are slightly out of the maximum linearity point, the maximum deviation from the linearity point for the two outputs is decreased, resulting in a decrease in distortion.

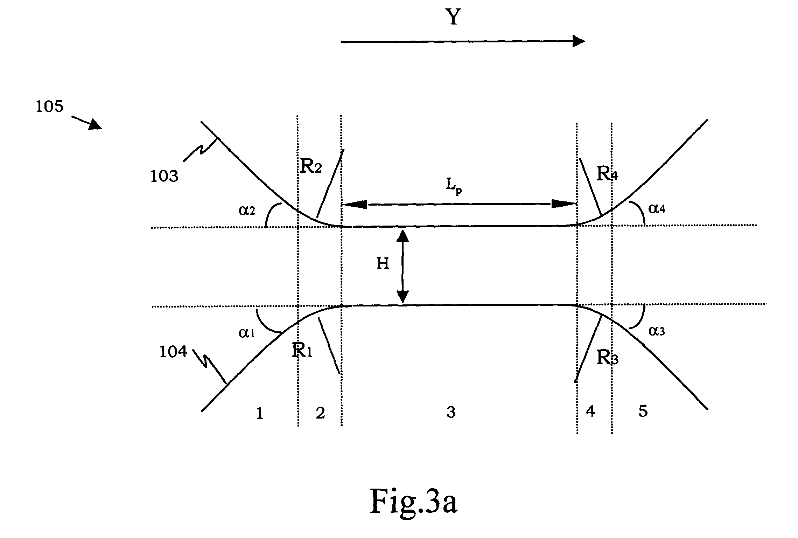

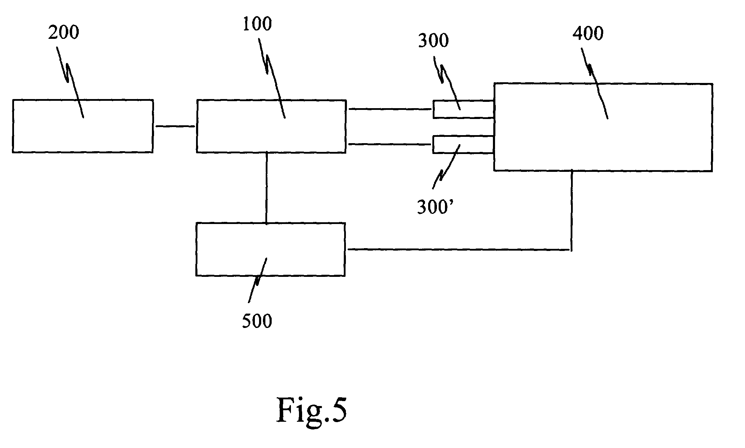

The relative phase delay $\triangle\phi$ for a dual output Mach Zehnder modulator can be measured with the experimental setup sketched in fig. 5. The signal coming from a laser 200, which can be a DFB laser with a wavelength of 1550 nm, is passed to the modulator 100 and comes out from the two outputs of the same. A RF signal from a RF signal generator 500 is also coupled to the modulator 100. The RF signal can be for example a triangular ramp at 100 KHz. The two outputs of the modulator 100 are connected to two photodiodes 300, 300', in such a way that the modulated signal can be measured by a digital oscilloscope 400, triggered by the RF signal generator 500. By means of markers or computer processing the positions of maxima and minima can be determined. Then, their relative difference, normalised to the period of the signal, gives the requested relative phase delay. A first embodiment of a directional coupler 105 is shown in fig. 3a. Coupler 105 comprises optical waveguides 103, 104 formed on a planar optical substrate. It can be advantageously used, for example, in the previously described dual output modulator. Coupler 105 can be subdivided for convenience in five different regions, indicated with reference numbers from 1 to 5 in fig. 3a.

In region 1, waveguides 103, 104 converge according to angles $\alpha_1$, $\alpha_2$ with respect to a longitudinal direction Y of the substrate.

In region 2, waveguides 103, 104 are still in mutual approach, but bent, for example according to arcs of a circle having radiuses of curvature $R_1$, $R_2$.

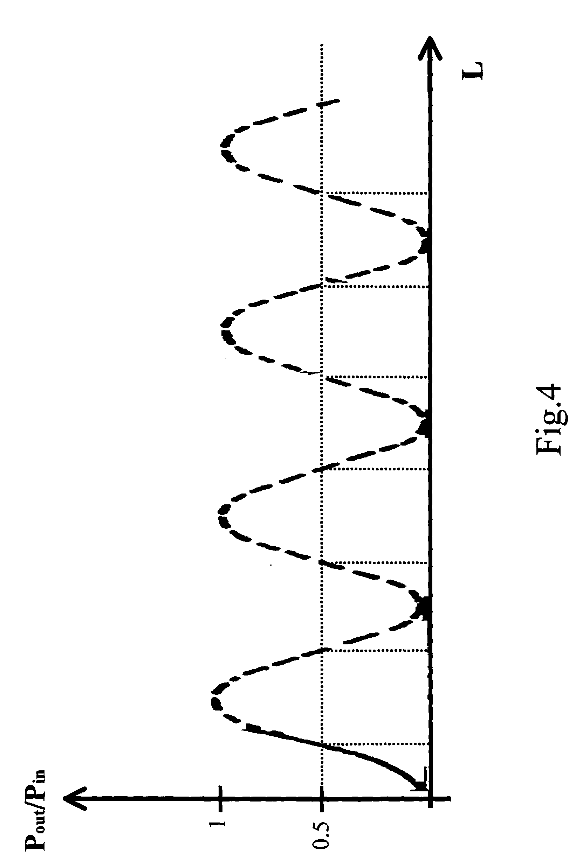

In central region 3, waveguides 103, 104 are parallel and separated by a distance H. Throughout the present description, the term "parallel" is used to indicate waveguides that form an angle of less than 0.2° between them. In this connection, the distance H between the waveguides 103, 104 is to be intended as the minimum distance between the waveguides 103, 104. The length of such central region 3, indicated with $L_p$ in fig. 3a, is chosen in such a way that if an optical signal is launched in one of the waveguides 103, near half of the optical power is coupled in the other waveguide 104 (3 dB coupling condition). As shown in fig. 4, different length values can be chosen in principle, since the plot of the splitting ratio $P_{out}/P_{in}$ (that is the ratio between the input power in one of waveguides 103,104 and the output power in the other waveguide 104,103 at the output of the directional coupler) versus the length of X of the directional coupler 105 is a periodic function. In order to minimise the substrate length and to broaden the wavelength band of operation for the coupler, $L_p$ is generally chosen as the minimum length for which the 3 dB coupling condition ($P_{out}/P_{in}=0.5$) is satisfied.

The better the 3 dB condition is satisfied for coupler 105, the higher is the extinction ratio (ER), that is the ratio of maximum optical power to minimum optical power during modulation, for a dual output modulator 100 comprising coupler 105. An unbalanced splitting, namely, results in the impossibility of achieving a complete destructive interference (and a complete cancellation of the output power) in one of the two outputs as a result of the interference of the signals.

In order to have a good Signal to Noise Ratio (SNR) in an optical transmission system using an optical modulator, an ER value higher than 22 dB is preferred.

Maximum ER is also related to tolerances in the waveguides manufacturing process, in particular to repeatability in the value of the horizontal mode field diameter (HMFD). The horizontal mode field diameter (HMFD) is defined as the $1/e^2$ width of the field of the single mode propagating in the optical waveguides 103,104 in a direction parallel to the plane of the substrate. The HMFD is related to the dimensions of the optical waveguides. Choosing the coupler parameters so as to achieve a maximum in ER (that is, a splitting ratio close to 3 dB) ensures a high stability in the actual ER value with respect to HMFD variation due to the manufacturing process fluctuations. In order to have a sufficient tolerance for non-idealities, the splitting ratio preferably does not go below 44% or above 56%.

According to an exemplary embodiment, the HMFD of the optical waveguide is constant along the whole waveguides, including the coupling region.

In region 4, waveguides 103, 104 start to diverge according to suitable bends, for example according to arcs of a circle having radiuses of curvature $R_3$, $R_4$.

Finally, in region 5, waveguides 103, 104 diverge according to angles $\alpha_3$, $\alpha_4$ with respect to a longitudinal direction Y on the substrate.

Angles $\alpha_1$, $\alpha_2$ $\alpha_3$ $\alpha_4$ as well as radius of curvature $R_1$, $R_2$, $R_3$, $R_4$ may have the same value and have to be sufficiently low in order to avoid excess losses: typical values are tenths of degree to few degrees for the angles and millimetres to tens of mm for the radiuses of curvature.

The terms "converge" and diverge" is referred herein to the direction of travelling of the optical signals in the coupler, that is from left to right in figure 3a. It is observed, however, that the directional coupler of the invention is symmetrical, and is not limited to a specific travelling direction for the optical signals.

As discussed, an evanescent directional coupler is achieved by smoothly decreasing the distance between two waveguides until a value which gives an appreciable coupling. The coupler comprises further a parallel waveguide section, where usually the major part of the coupling takes place, then the distance is again increased to let the waveguides be uncoupled. The coupling is measured through a coupling coefficient per unit length k(z). In conditions of weak coupling, that is approximately when the distance between waveguides is more than 1.5 horizontal mode field diameters, the coupling coefficient is approximated by the formula

$$k=K0*exp(-g*H)$$

where k0 and g are parameters depending on the material and light properties, and H is the distance between waveguides.

Properly speaking, the coupling coefficient never becomes zero, but it is considered zero when it is so small that no appreciable coupling takes place within the components typical dimensions (some centimetres of length). With an optical horizontal mode field diameter of about 10 µm (referring to diffused Titanium waveguides on Lithium Niobate), waveguides with a relative distance greater than 30 µm are considered uncoupled. In general, a total coupling length can be defined as the length of the region wherein the centre lines of the waveguides have a distance lower than three times the HMFD. The total coupling is obtained by integration of the coupling coefficient k(z) along the propagation distance z:

$$C= \int_{-\infty}^{\infty} k(z)dz$$

The integration limits are $\pm\infty$ but it is understood that only a limited section is important for the coupling, namely a coupling region having the above defined total coupling length.

Choosing the length of the coupling region as the minimum length for which the 3 dB coupling condition ($P_{out}P_{in}$ =0.5 ) is satisfied corresponds to selecting =π/4.

A preferred splitting ratio between 44% and 56% corresponds to $0.88\pi/4 <C<1.12 \pi/4$.

A "strong coupling region" is defined as the region around the minimum distance H between the optical waveguides 103, 104 wherein the centre lines of optical waveguides 103, 104 are separated by less than 1.5 horizontal mode field diameters. The length of the strong coupling region is indicated as $L_{scr}$.

Applicant has determined that, advantageously, the length $L_p$ of the coupling region where the optical waveguides 103,104 are parallel (within $\pm 0.1°$) is less than 35% of the total length the strong coupling region ($L_p \leq 0.35 L_{scr}$).

## Example 1

A series of dual output modulators comprising a directional coupler with parallel waveguides according to the first embodiment of Fig. 3a was made by Applicant. The modulators were made on an X-cut, 50 mm long, 4 mm wide, 1 mm thick lithium niobate chip. Optical waveguides in the configuration of fig. 1 were made on the surface of the chip by titanium diffusion. The horizontal mode field diameter was of 10 µm for an optical signal having λ=1550 nm. Then, a 0.5 µm thick layer of $SiO_2$ was deposited, followed by deposition of 5 µm thick gold RF and bias electrodes. The lengths of the RF electrode and of the bias electrode were respectively 30 mm and 9 mm. No phase modulator was present.

As far as the directional coupler 105, angles $\alpha_1$, $\alpha_2$, $\alpha_3$, $\alpha_4$ were all 0.5°; radiuses of curvature $R_1$, $R_2$, $R_3$, $R_4$ of bends were 50 mm; the minimum distance H between the centre line of the waveguides was 12 µm.

The modulators were made with different values of length $L_p$ for the parallel waveguides region 3 of fig. 3a. In the following table the results are reported, in terms of length of the strong coupling region $L_{scr}$, corresponding value $L_p /L_{scr}$, extinction ratio ER and relative phase delay $\triangle\phi$ obtained.

Table 1

| $L_p$ (µm) | $L_{scr}$ (µm) | $L_p/ L_{scr}$ | ER (dB) | $\triangle\phi$ (°) |
|---|---|---|---|---|
| 200 | 850 | 0.24 | -19.23 | 1.00 |
| 300 | 950 | 0.31 | -23.06 | 0.40 |
| 400 | 1050 | 0.38 | -28.67 | 1.52 |
| 500 | 1150 | 0.43 | -16.38 | 4.83 |
| 600 | 1250 | 0.48 | -10.57 | 8.87 |

As can be seen, maximum ER is reached with the modulator having $L_p$=400 µm: for this modulator, the value of $\triangle\phi$ is not acceptable. For the modulator having $L_p$=300 µm a good result is obtained both for ER and $\triangle\phi$. The modu-

lator having $L_p$=200 μm has a less than optimum ER value.

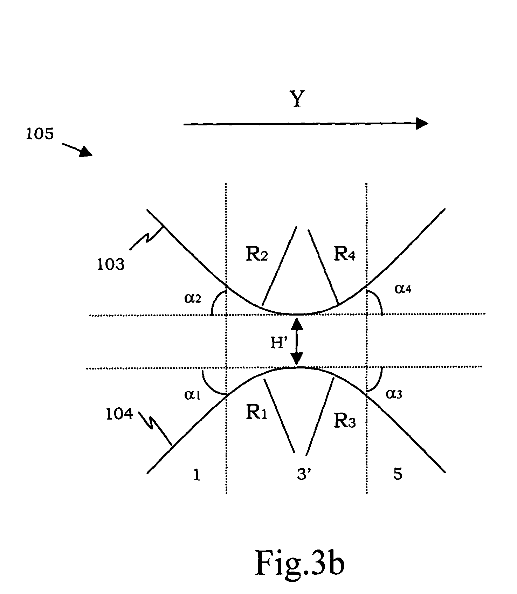

A directional coupler according to a second embodiment is shown in fig. 3b. Same reference numbers represent the same or similar elements with respect to fig. 3a. The coupler 105 is formed by waveguides 103, 104 and can be subdivided for convenience in three different regions, indicated with reference numbers 1, 3', 5 in fig. 3b.

In region 1, waveguides 103, 104 converge according to angles $\alpha_1$, $\alpha_2$, with respect to a longitudinal direction Y of the substrate.

In the region 5, waveguides 103, 104 diverge according to angles $\alpha_3$, $\alpha_4$, with respect to a longitudinal direction Y of the substrate.

In region 3', waveguides 103, 104 are bent in such a way that they converge, reach a minimum relative distance H' and start to diverge from each other again. The waveguide bend is, for example, according to arcs of a circle having radiuses of curvature $R_1$, $R_2$, $R_3$, $R_4$ as shown in fig. 3b.

In region 3' the optical waveguides 103, 104 are substantially not parallel (within $\pm 0.1°$) and the length $L_p$ of the region of parallel waveguides in this second embodiment is substantially 0.

The total length of the region 3' is lower than the ensemble of the regions 2, 3, 4 of a directional coupler according to the first embodiment having same values of $\alpha_1$, $\alpha_2$, $\alpha_3$, $\alpha_4$ and $R_1$, $R_2$, $R_3$, $R_4$. Thus, in order to have suitable coupling, mutual approaching of optical waveguides 103, 104 reaches a minimum value H' which is lower than the corresponding value H in the directional coupler of the first embodiment having same values of $\alpha_1$, $\alpha_2$, $\alpha_3$, $\alpha_4$ and $R_1$, $R_2$, $R_3$, $R_4$.

The total length of the directional coupler is chosen in such a manner that it is the minimum length for which the 3 dB condition is satisfied (referring to fig. 4).

## Example 2

A series of modulators comprising a directional coupler with any region of parallel waveguides was made by the Applicant. Geometrical dimensions of the chip, waveguides, electrodes, angles and radius of curvature of bends in the directional coupler were the same of example 1.

The modulators were made with various values of the minimum distance H' between waveguides, in the region indicated with 3' in fig. 3b. The length of the strong coupling region $L_{scr}$, as previously defined, was of about 760 μm for all these modulators. The length of the parallel waveguide region $L_p$ is in this case substantially 0 for all the modulators of this series. In the following table the results for ER and $\triangle\phi$ are reported.

Table 2

| H' (μm) | ER (dB) | $\triangle\phi(°)$ |
|---------|---------|--------------------|
| 11.0 | -19.17 | 0.52 |
| 10.9 | -25.78 | 0.56 |
| 10.8 | -33.84 | 0.05 |
| 10.7 | -31.54 | 0.04 |
| 10.6 | -20.54 | 0.37 |
| 10.5 | -20.01 | 0.31 |

As can be seen, the maximum value of ER is very high and corresponds to the minimum value of $\triangle\phi$. Thus, a modulator comprising a directional coupler substantially free of a parallel waveguide section is a preferred embodiment of the invention.

## Example 3

Applicant has developed a simplified model of directional coupler to account for the losses along the coupler waveguides. In the model the losses are assumed to be proportional to the propagation length. A computer simulation based on this model has been made, to compare the performances of a conventional coupler and a coupler according to fig. 3b. Geometrical parameters adopted in the simulation are as follows:

Horizontal Mode Field Diameter = 10 μm;
$\alpha_1 = \alpha_2 = \alpha_3 = \alpha_4 = 0.5°$;

$R_1=R_2=R_3=R_4=50$ mm.

The conventional coupler is assumed to have a design according to fig. 3a, but a relatively long length of the parallel waveguide section 3. A distance H = 12 $\mu$m between the waveguides is assumed for the conventional coupler. Under these assumptions the 3 dB splitting condition (and a maximum in ER) for this coupler is reached for $L_p$=500 $\mu$m. The length $L_{scr}$ of the strong coupling region is $L_{scr}$ =1150 $\mu$m, and $L_p/L_{scr}$0.43.

The 3 dB splitting condition (and a maximum in ER) for fig. 3b coupler is reached for H' = 10.5 $\mu$m. The difference in length between the two couplers amounts to 270 $\mu$m, to be compared to a total coupling length of 3 mm. This does not correspond to an important reduction in the overall component length, but is nevertheless decisive for the relative delay performance of the coupler.

In the calculated results ER reaches very high values (beyond 40 dB). It is observed that the simplified model does not take into account non idealities such as unequal amplitudes in the two waveguide branches. These non idealities may limit in practice the measured ER values to lower values.

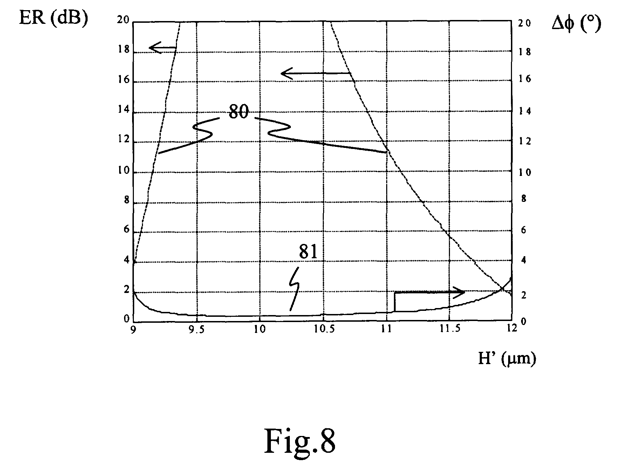

Fig. 8 reports relative delay 81 (in degrees) and ER values 80 (in dB) versus H' (in $\mu$m) for a coupler according to fig. 3b. The result shows that the region of minimum relative phase delay corresponds with the region of maximum ER. As previously discussed, a choice of the waveguide layout leading to operation in a region of maximum ER is preferred, due to an increased tolerance to manufacturing process variations. The result of fig. 8, accordingly, shows that a coupler design according to the previously disclosed second embodiment allows to achieve a minimum relative phase delay in combination with optimum manufacturing conditions.

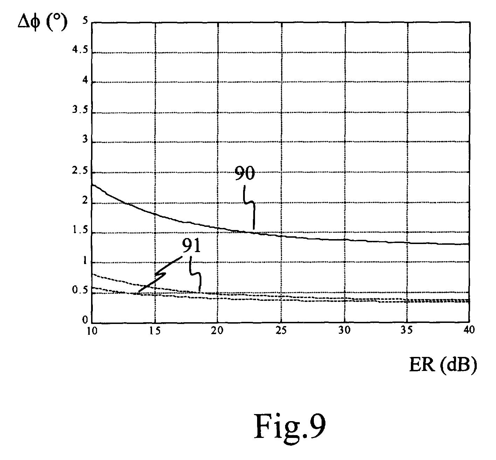

Fig. 9 is a chart reporting relative delay versus extinction ratio for a conventional coupler (90) and a coupler according to fig. 3b (91). It is apparent that the invention coupler of fig. 3b has superior performances in comparison with the conventional coupler, for example as to the absolute value of relative phase delay. Moreover, the relative phase delay is flatter with respect to the coupling ratio, thus ensuring an increased tolerance with respect to technological process fluctuations.

The invention coupler may also be used advantageously in a coherent receiver.

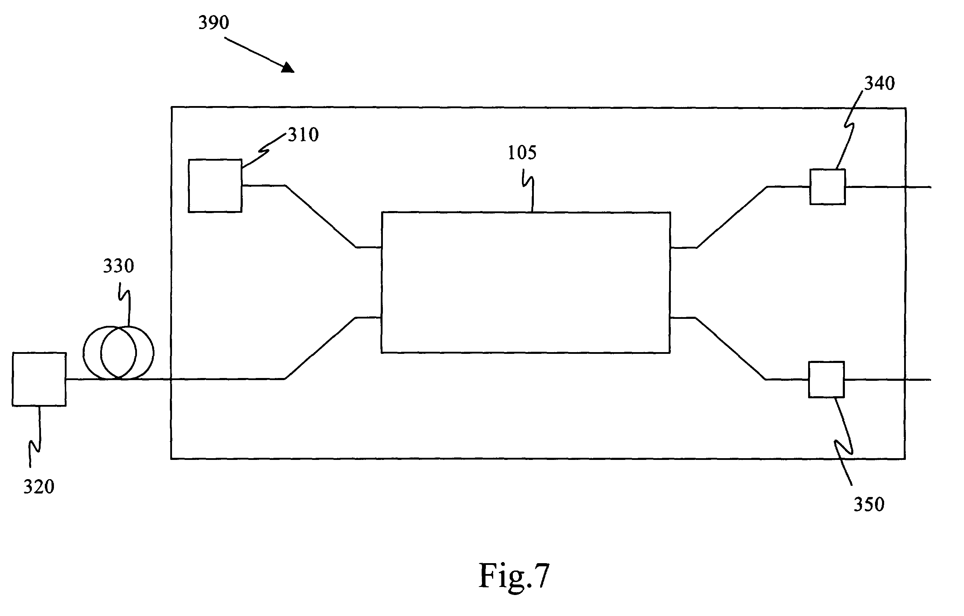

A coherent receiver 390 is schematically shown in fig. 7.

An optical source 310 (local oscillator) is coupled to one input of an optical coupler 105 according to one of the previously disclosed embodiments. An optical transmission signal is generated by a modulated laser source 320 at a distant location and transmitted by an optical fibre 330 to a second input of optical coupler 105.

The two complementary outputs of coupler 105 are coupled to photodetectors 340, 350. The electrical signals from photodetectors 340, 350 are further processed electronically, according to known techniques, to extract the signal modulation information.

Applicants have determined that by use of the invention directional coupler significantly low loss values in a strong coupling region of the coupler are achieved, and that low phase delay between the coupler output result, so that the signal and local oscillator are effectively mixed with low IF signal degradation.

**Claims**

1. Analog optical transmission system, comprising:

   - an optical source (200) for emitting an optical signal;
   - a dual output electro-optical modulator (100) for modulating the optical signal by an analog electrical signal (285);
   - two optical fibre lines (220, 230) coupled to respective outputs of the modulator, for transmitting the modulated optical signal to at least two receiving units (265, 275);
   - the electro-optical modulator comprising a Mach-Zehnder interferometer with an input path (102), two arms (103, 104) and a directional coupler (105),
   - wherein the directional coupler comprises two waveguides on a planar substrate (101) defining two inputs, two outputs and a coupling region between the inputs and the outputs where the waveguides are in close proximity to each other so as to cause coupling between them,
     characterised in that the coupling region of the directional coupler comprises a strong coupling region and in that the length of parallel sections of optical waveguides in the coupling region is less than 35% of the length of the strong coupling region.

2. System according to Claim 1, wherein at least one optical amplifier (205, 210) is coupled along at least one of the fibre lines.

3. System according to Claim 2, wherein at least a distribution station (240, 250) with one input and a plurality of outputs is coupled to at least one of the fibre lines.

4. Dual output electro-optical modulator (100) for modulating an optical signal by an electrical signal (285), comprising a Mach-Zehnder interferometer with an input path (102), two arms (103, 104) and a directional coupler (105), wherein the directional coupler comprises two waveguides on a planar substrate (101) defining two inputs, two outputs and a coupling region between the inputs and the outputs where the waveguides are in close proximity to each other so as to cause coupling between them,
characterised in that the coupling region of the directional coupler comprises a strong coupling region and in that the length of parallel sections of optical waveguides in the coupling region is less than 35% of the length of the strong coupling region.

5. Dual output electro-optical modulator according to claim 4, characterised in that said input path and said two arms are optical waveguides on said planar substrate.

6. Dual output electro-optical modulator according to claim 5, comprising a dielectric buffer layer at least partly covering said planar substrate.

7. Dual output electro-optical modulator according to claims 5 or 6, characterised in that it comprises at least one ground electrode (113, 114) for coupling to a reference voltage.

8. Dual output electro-optical modulator according to Claim 7, characterised in that it comprises an RF electrode (108) for modulating the relative phase between said two arms.

9. Dual output electro-optical modulator according to Claim 7, characterised in that it comprises an bias electrode (109) for selling the operating point of the modulator.

10. Dual output electro-optical modulator according to Claim 7, characterised in that it comprises an electrode (111) for the phase modulation of said optical signal.

11. Optical apparatus comprising at least an optical source for generating two mutually coherent signals and a planar optics coupler (105) for coherently mixing said optical signals, wherein the coupler comprises two optical waveguides (103, 104) formed on a planar substrate defining two inputs, two outputs and a coupling region between the inputs and the outputs where the waveguides are in close proximity to each other so as to cause coupling between them,
characterised in that the coupling region comprises a strong coupling region and in that the length of parallel sections of optical waveguides in the coupling region is less than 35% of the length of the strong coupling region.

12. Optical apparatus according to claim 11, wherein the relative phase of the two optical signals changes with time.

13. Optical apparatus according to claim 11, wherein the coupler has a splitting ratio between 44% and 56%.

14. Optical apparatus according to claim 13, wherein the coupler has a 50% splitting ratio.

15. Optical apparatus according to claim 11, wherein the coupler has a relative phase delay lower than 0.6°.

16. Optical apparatus according to claim 15, wherein the coupler has a relative phase delay lower than 0.3°.

17. Coherent optical receiver for receiving a coherent information bearing signal comprising a local oscillator (310), an optical coupler (105) with two inputs and two outputs and two photodetectors coupled at respective coupler outputs, the coupler comprising two optical waveguides formed on a planar substrate defining two inputs, two outputs and a coupling region between the inputs and the outputs wherein the waveguides are in close proximity to each other so as to cause coupling between them,
characterised in that the coupling region comprises a strong coupling region and in that the length of parallel sections of optical waveguides in the coupling region is less than 35% of the length of the strong coupling region.

18. Method for reducing the relative phase delay in a planar waveguide coupler comprising the steps of:

- selecting a predetermined value of horizontal mode field diameter, in a selected wavelength operating range, for two waveguides on a planar substrate;

- forming a coupling region between the two waveguides by arranging the waveguides in a close proximity relationship;
- selecting the relative distance of the waveguides in a strong coupling region, included in the coupling region, at a distance lower than 1.5 times the horizontal mode field diameter;
- tapering the distance of the waveguides in the strong coupling region so that the waveguides are substantially not parallel;
- selecting the length of the strong coupling region as the minimum length achieving a uniform splitting ratio between the outputs.

19. Method for reducing the relative phase delay in a planar waveguide coupler according to claim 18, wherein said uniform splitting ratio is between 44% and 56%.

Fig.1

Fig.2

16

Fig.3a

Fig.3b

Fig.4

EP 1 037 096 A2

Fig.5

Fig.6

EP 1 037 096 A2

Fig.7

EP 1 037 096 A2

Fig.8

EP 1 037 096 A2

EP 1 037 096 A2

Fig.9